# EUROPÄISCHE PATENTANMELDUNG

(11) **EP 3 875 263 A1**
(43) Veröffentlichungstag der Anmeldung: **08.09.2021**
(21) Anmeldenummer: 20161376.7
(22) Anmeldetag: 06.03.2020
(51) Int. Cl.: B32B 1/08, B32B 25/08, B32B 27/08

(54) **MEHRSCHICHTIGE KRAFTFAHRZEUG-ROHRLEITUNG**

(71) Anmelder: TI Automotive (Fuldabrück) GmbH, 34277 Fuldabrück (DE)
(72) Erfinder: HÄCKEL, André, 34513 Waldeck (DE); SCHRAMOWSKI, Martin, 34134 Kassel (DE)
(74) Vertreter: Andrejewski - Honke Patent- und Rechtsanwälte Partnerschaft mbB

(57) **Zusammenfassung**

Mehrschichtige Kraftfahrzeug-Rohrleitung zur Durchleitung zumindest eines fluiden Mediums, wobei die Rohrleitung einen Fluidkanal und eine den Fluidkanal umgebende Rohrwandung aufweist. Die Rohrwandung ist mehrschichtig ausgebildet und weist zumindest drei Schichten auf, und zwar mit folgendem Schichtaufbau: Es ist eine äußere Schicht aus zumindest einem Polyamid, insbesondere aus zumindest einem aliphatischen Polyamid vorgesehen. Weiterhin ist eine Haftvermittlerschicht vorgesehen und eine innere Schicht aus zumindest einem thermoplastischen Elastomer. Die Gesamtschichtdicke d der Rohrwandung beträgt 0,3 bis 3,0 mm.

## Beschreibung

Die Erfindung betrifft eine mehrschichtige Kraftfahrzeug-Rohrleitung zur Durchleitung zumindest eines fluiden Mediums, wobei die Rohrleitung einen Fluidkanal und eine den Fluidkanal umgebende Rohrwandung aufweist, wobei die Rohrwandung mehrschichtig ausgebildet ist und zumindest drei Schichten aufweist. Die erfindungsgemäße Rohrleitung wird bevorzugt als Temperier-Rohrleitung in Temperier-Kreisläufen von Kraftfahrzeugen eingesetzt. Dabei wird ein fluides Temperiermedium, beispielsweise ein flüssiges oder gasförmiges Temperiermedium, durch die Rohrleitung geführt. Bei der erfindungsgemäßen Rohrleitung handelt es sich also vorzugsweise um eine Temperier-Rohrleitung. Eine besonders bevorzugte Ausführungsform der erfindungsgemäßen Kraftfahrzeug-Rohrleitung ist dadurch gekennzeichnet, dass die Rohrleitung als Kühlrohrleitung in einem Temperier-Kreislauf bzw. Kühlkreislauf eines Kraftfahrzeuges eingesetzt wird. Wenn die Rohrleitung als Kühlrohrleitung eingesetzt wird, wird ein Kühlmedium - insbesondere ein flüssiges Kühlmedium - eines Kühlkreislaufes des Kraftfahrzeuges durch die Kühlrohrleitung geleitet. Die erfindungsgemäßen mehrschichtigen Rohrleitungen können beispielsweise als Temperier-Rohrleitungen bzw. Kühlrohrleitungen in Klimaanlagen von Kraftfahrzeugen eingesetzt werden. Weiterhin wird die Rohrleitung in Temperier-Kreisläufen von Elektrofahrzeugen oder von Hybrid-Kraftfahrzeugen verwendet und dort vorzugsweise zur Temperierung bzw. Kühlung der Batteriesysteme eingesetzt.

Mehrschichtige Kraftfahrzeug-Rohrleitungen und Temperier-Rohrleitungen bzw. Kühlrohrleitungen sind aus der Praxis in unterschiedlichen Ausführungsformen grundsätzlich bekannt. Es ist auch bekannt, solche mehrschichtigen Rohrleitungen in Temperier-Kreisläufen von Kraftfahrzeugen einzusetzen. Es hat sich aber gezeigt, dass die bisher bekannten Rohrleitungen eine Reihe von Nachteilen aufweisen. Die Rohrleitungen lassen oftmals im Hinblick auf ihre Barriereeigenschaften und/oder im Hinblick auf ihre mechanische Stabilität bzw. Resistenz zu wünschen übrig. Wenn ein Kompromiss zwischen ausreichenden Barriereeigenschaften und hoher mechanischer Stabilität der Rohrleitung erreicht werden soll, ist dies häufig nur mit hohem Fertigungsaufwand bzw. mit hohen Materialkosten möglich. Darüber hinaus müssen die Temperier-Rohrleitungen beim Einsatz in unterschiedlichen Temperier-Kreisläufen, beispielsweise in einer Kraftfahrzeug-Klimaanlage oder in einem Temperiersystem von Hybrid- bzw. Elektrofahrzeugen unterschiedliche Anforderungen erfüllen. Dies führt in der Praxis dazu, dass für die verschiedenen Einsatzgebiete unterschiedliche Rohrleitungen verwendet werden müssen. - Insoweit besteht Verbesserungsbedarf.

Demgegenüber liegt der Erfindung das technische Problem zugrunde, eine Kraftfahrzeug-Rohrleitung der eingangs genannten Art anzugeben, die im Hinblick auf ihre Barriereeigenschaften und ihre mechanische Stabilität allen Anforderungen genügt, die dennoch mit geringen Herstellungskosten gefertigt werden kann und die gleichsam universell bzw. flexibel in Temperier-Kreisläufen, beispielsweise in Kühlmittelkreisläufen von Kraftfahrzeugen eingesetzt werden kann.

Zur Lösung dieses technischen Problems lehrt die Erfindung eine mehrschichtige Kraftfahrzeug-Rohrleitung zur Durchleitung zumindest eines fluiden Mediums, wobei die Rohrleitung einen Fluidkanal und eine den Fluidkanal umgebende Rohrwandung aufweist, wobei die Rohrwandung mehrschichtig ausgebildet ist und zumindest drei Schichten aufweist und zwar mit folgendem Schichtaufbau von außen nach innen:
- eine äußere Schicht aus zumindest einem Polyamid, insbesondere aus zumindest einem aliphatischen Polyamid
- eine Haftvermittlerschicht
- eine innere Schicht aus zumindest einem thermoplastischen Elastomer,
wobei die Gesamtschichtdicke d der Rohrwandung 0,3 bis 3,0 mm, vorzugsweise 0,5 bis 2,5 mm und bevorzugt 0,75 bis 2,0 mm beträgt.

Die Erfindung betrifft eine mehrschichtige Kraftfahrzeug-Rohrleitung bzw. deren Verwendung als Temperier-Rohrleitung in Kraftfahrzeugen. Dabei wird ein fluides Temperiermedium, insbesondere ein flüssiges Temperiermedium und bevorzugt ein flüssiges Kühlmedium durch die Rohrleitung geführt. Die erfindungsgemäße Kraftfahrzeug-Rohrleitung kann als Temperier-Rohrleitung, insbesondere als Kühlrohrleitung, in einem Temperier-Kreislauf bzw. Kühlkreislauf eines Kraftfahrzeuges eingesetzt werden. Bei der erfindungsgemäßen mehrschichtigen Kraftfahrzeug-Rohrleitung handelt es sich somit vorzugsweise um eine Temperier-Rohrleitung und insbesondere um eine Kühlrohrleitung. Nach einer empfohlenen Ausführungsform der Erfindung wird die erfindungsgemäße Rohrleitung in einem Temperier-Kreislauf zur Temperierung bzw. Kühlung des Batteriesystems eines Elektrofahrzeuges oder eines Hybridfahrzeuges eingesetzt. Es liegt auch im Rahmen der Erfindung, dass die erfindungsgemäße Rohrleitung als Temperier-Rohrleitung bzw. Kühlrohrleitung in einer Klimaanlage eines Kraftfahrzeuges zum Einsatz kommt. Es empfiehlt sich, dass als Temperiermedium bzw. Kühlmedium ein Alkohol-Wasser-Gemisch, vorzugsweise ein Glykol-Wasser-Gemisch verwendet wird. Im Rahmen der Erfindung können aber auch andere Temperiermedien bzw. Kühlmedien eingesetzt werden.

Der Erfindung liegt die Erkenntnis zugrunde, dass die erfindungsgemäße, mehrschichtige Kraftfahrzeug-Rohrleitung hinsichtlich ihrer Barriereeigenschaften und ihrer mechanischen Stabilität allen Anforderungen genügt und gleichzeitig mit geringem Fertigungsaufwand hergestellt werden kann. Darüber hinaus kann die erfindungsgemäße mehrschichtige Kraftfahrzeug-Rohrleitung als Temperier-Rohrleitung bzw. Kühlrohrleitung in Temperier-Kreisläufen bzw. Kühlkreisläufen von Kraftfahrzeugen aufgrund ihrer vorteilhaften Eigenschaften flexibel bzw. universell eingesetzt werden. Ein besonderer Vorteil der erfindungsgemäßen Rohrleitung ist in diesem Zusammenhang, dass sie aufgrund ihres speziellen Schichtenverbundes sowohl in Temperier-Kreisläufen bzw. Kühlkreisläufen von Klimaanlagen, als auch in Temperier-Kreisläufen bzw. Kühlkreisläufen für Batteriesysteme von Elektro- und/oder Hybridfahrzeugen eingesetzt werden kann.

Die erfindungsgemäße Gesamtschichtdicke d der Rohrwandung im Bereich von 0,3 bis 3,0 mm, vorzugsweise 0,5 bis 2,5 mm und bevorzugt 0,75 bis 2,0 mm hat sich im Hinblick auf die Lösung des technischen Problems besonders bewährt.

Eine sehr empfohlene Ausführungsform der Erfindung zeichnet sich dadurch aus, dass die äußere Schicht aus zumindest einem aus der Gruppe "Polyamid 6, Polyamid 10, Polyamid 11, Polyamid 12" ausgewählten Polyamid, vorzugsweise aus Polyamid 6, besteht bzw. im Wesentlichen besteht. Die äußere Schicht kann neben dem zumindest einen Polyamid auch Additive aufweisen. Es empfiehlt sich, dass die äußere Schicht zu mindestens 90 Gew. - %, vorzugsweise zu mindestens 93 Gew.-%, bevorzugt zu mindestens 97 Gew.-% aus zumindest einem aus der oben genannten Gruppe ausgewählten Polyamid, vorzugsweise aus Polyamid 6, besteht.

Erfindungsgemäß ist eine innere Schicht aus zumindest einem thermoplastischen Elastomer vorgesehen. Es liegt dabei im Rahmen der Erfindung, dass das thermoplastische Elastomer auf Basis zumindest einer aus der Gruppe: "Ethylen-Propylen-Dien-Kautschuk (EPDM), Butylkautschuk, Chlorbutylkautschuk, Styrol-Butadien-Kautschuk, Nitrilkautschuk, Nitril-Butadien-Kautschuk" ausgewählten Komponente ausgebildet ist. Gemäß besonders empfohlener Ausführungsform ist das thermoplastische Elastomer auf Basis von Ethylen-Propylen-Dien-Kautschuk (EPDM) ausgebildet. Es liegt im Rahmen der Erfindung, dass die innere Schicht aus dem zumindest einen thermoplastischen Elastomer besteht bzw. im Wesentlichen besteht. Zweckmäßigerweise besteht die innere Schicht zu mindestens 90 Gew.-%, vorzugsweise zu mindestens 93 Gew.-%, bevorzugt zu mindestens 97 Gew.-% aus dem thermoplastischen Elastomer. Die innere Schicht kann zusätzlich zu dem zumindest einen thermoplastischen Elastomer Additive aufweisen.

EPDM hat sich als Komponente für das thermoplastische Elastomer der inneren Schicht der erfindungsgemäßen Rohrleitung besonders bewährt und führt insbesondere zu sehr vorteilhaften Eigenschaften der Rohrleitung bezüglich ihrer mechanischen Stabilität. Gemäß einer Ausführungsform der erfindungsgemäßen Kraftfahrzeug-Rohrleitung besteht die innere Schicht aus EPDM bzw. im Wesentlichen aus EPDM. Es liegt im Rahmen der Erfindung, dass das thermoplastische Elastomer der inneren Schicht ein thermoplastisches Elastomer auf Olefinbasis (TPO) ist. Zweckmäßigerweise weist ein solches TPO-Elastomer im Rahmen der Erfindung EPDM und ein Polyolefin, vorzugsweise Polypropylen, auf. Besonders bevorzugt ist im Rahmen der Erfindung das thermoplastische Elastomer der inneren Schicht ein thermoplastisches Vulkanisat (TPV). Nach einer empfohlenen Ausführungsform der Erfindung wird als thermoplastisches Vulkanisat (TPV) dann für die innere Schicht eine Mischung bzw. eine Legierung aus einem Elastomer bzw. Kautschuk und einem Polyolefin - insbesondere Polypropylen - eingesetzt. Bei dem Elastomer bzw. Kautschuk handelt es sich vorzugsweise um EPDM.

Erfindungsgemäß ist zwischen der äußeren Schicht und der inneren Schicht eine Haftvermittlerschicht vorgesehen. Eine sehr empfohlene Ausführungsform der Erfindung zeichnet sich dadurch aus, dass die Haftvermittlerschicht auf Basis zumindest eines Polyolefins ausgebildet ist. Ganz besonders bevorzugt ist die Haftvermittlerschicht auf Basis von Polypropylen ausgebildet. Zweckmäßigerweise besteht die Haftvermittlerschicht aus Polypropylen bzw. im Wesentlichen aus Polypropylen. Die Haftvermittlerschicht kann neben dem zumindest einen Polyolefin, vorzugsweise neben dem Polypropylen, Additive aufweisen. Es empfiehlt sich, dass die Haftvermittlerschicht zu mindestens 90 Gew.-%, vorzugsweise zu mindestens 93 Gew.-%, bevorzugt zu mindestens 96 Gew.-% und sehr bevorzugt zu mindestens 98 Gew.-% aus dem Polyolefin bzw. aus Polypropylen besteht. Die Haftvermittlerschicht gewährleistet im Rahmen der Erfindung insbesondere, dass die sie umgebenden Schichten, beispielsweise die äußere Schicht und die innere Schicht funktionssicher miteinander verbunden sind und vermeidet eine unerwünschte Delamination des Schichtenverbundes bei mechanischer Beanspruchung der Rohrleitung. Durch die erfindungsgemäße Haftvermittlerschicht kann überraschend einfach und funktionssicher eine Delamination vermieden werden und dies ist durch die Haftvermittlerschicht insbesondere mit geringem Fertigungsaufwand und geringen Kosten möglich.

Eine besonders bevorzugte Ausführungsform der Erfindung ist dadurch gekennzeichnet, dass die Rohrleitung eine Außenschicht aufweist, die nach außen hin an die äußere Schicht anschließt. In einer solchen Ausführungsvariante berühren sich somit vorzugsweise die äußere Schicht und die Außenschicht. Nach außen hin meint hier in Richtung der Außenseite der Kraftfahrzeug-Rohrleitung. Zweckmäßigerweise ist die Außenschicht auf Basis zumindest eines Polyamids, bevorzugt auf Basis zumindest eines aliphatischen Polyamids, besonders bevorzugt auf Basis zumindest eines aus der Gruppe: "Polyamid 6.12, Polyamid 6.6, Polyamid 6.10, Polyamid 6.16" ausgewählten Polyamids und ganz besonders bevorzugt auf Basis von Polyamid 6.12 ausgebildet. Es liegt im Rahmen der Erfindung, dass die Außenschicht aus dem zumindest einen Polyamid besteht bzw. im Wesentlichen besteht und bevorzugt aus Polyamid 6.12 besteht bzw. im Wesentlichen besteht. Die Außenschicht kann zusätzlich zu dem Polyamid bzw. zu dem Polyamid 6.12 auch Additive aufweisen. Empfohlenermaßen besteht die Außenschicht zu mindestens 90 Gew.-%, vorzugsweise zu mindestens 93 Gew.-%, bevorzugt zu mindestens 96 Gew.-% und sehr bevorzugt zu mindestens 98 Gew.-% aus zumindest einem aus der oben genannten Gruppe ausgewählten Polyamid bzw. aliphatischen Polyamid und bevorzugt aus Polyamid 6.12. Es empfiehlt sich, dass die Außenschicht die nach außen hin abschließende Schicht der Rohrleitung ist. Grundsätzlich liegt es aber auch im Rahmen der Erfindung, dass die erfindungsgemäße Rohrleitung nach außen hin angrenzend an die Außenschicht noch zumindest eine äußerste Schicht aufweist. Gemäß einer empfohlenen Ausführungsform beträgt die Schichtdicke der Außenschicht 5 % bis 20 %, bevorzugt 10 % bis 15 % der Gesamtschichtdicke d der Rohrwandung.

Gemäß einer sehr bevorzugten Ausführungsform der Erfindung weist die Rohrleitung zumindest eine Barriereschicht auf. Die Barriereschicht ist vorzugsweise auf Basis zumindest eines thermoplastischen Polymers ausgebildet. Besonders bevorzugt ist die Barriereschicht auf Basis zumindest eines Polyolefins und ganz besonders bevorzugt auf Basis von Polypropylen ausgebildet. Es liegt dabei im Rahmen der Erfindung, dass die Barriereschicht aus dem zumindest einen Polyolefin besteht bzw. im Wesentlichen besteht. Bevorzugt besteht die Barriereschicht aus Polypropylen bzw. im Wesentlichen aus Polypropylen. Die Barriereschicht kann zusätzlich zu dem Polyolefin bzw. zu dem Polypropylen Additive aufweisen. Dabei kann es sich etwa um Leitfähigkeitszusätze handeln, so dass die Barriereschicht vorzugsweise elektrisch leitfähig ausgebildet ist. Es ist zweckmäßig, dass die Barriereschicht zu mindestens 90 Gew.-%, vorzugsweise zu mindestens 93 Gew.-%, bevorzugt zu mindestens 96 Gew.-% und sehr bevorzugt zu mindestens 98 Gew.-% aus dem zumindest einen Polyolefin, vorzugsweise aus Polypropylen besteht. Polypropylen hat sich als Material für die zumindest eine Barriereschicht besonders bewährt und zwar insbesondere hinsichtlich seiner Barriereeigenschaften. Der Ausführungsform der erfindungsgemäßen Rohrleitung mit einer Barriereschicht aus Polypropylen liegt weiterhin die Erkenntnis zugrunde, dass durch das Zusammenwirken von zumindest einer Polypropylen-Barriereschicht und einer inneren Schicht aus zumindest einem thermoplastischen Elastomer - insbesondere in Kombination mit den übrigen Schichten der Rohrleitung - besonders vorteilhafte Barriereeigenschaften und gleichzeitig eine hervorragende mechanische Stabilität der Rohrleitung erreicht werden kann.

Es ist bevorzugt, dass die zumindest eine Barriereschicht eine Innenschicht der Rohrleitung bildet, die vorzugsweise nach innen hin an die innere Schicht anschließt. Nach innen hin meint hier in Richtung der Innenseite bzw. des Fluidkanals der Kraftfahrzeug-Rohrleitung. In einer solchen Ausführungsvariante berühren sich somit vorzugsweise die innere Schicht und die Barriereschicht. Wenn die Barriereschicht eine Innenschicht der Rohrleitung bildet, dann ist diese Innenschicht vorzugsweise die nach innen hin abschließende Schicht der Rohrleitung. Es liegt aber auch im Rahmen der Erfindung, dass nach innen hin angrenzend an die Barriereschicht bzw. Innenschicht eine innerste Schicht vorgesehen ist.

Gemäß einer alternativen Ausführungsvariante der Erfindung ist die zumindest eine Barriereschicht zwischen der inneren Schicht und der Außenschicht angeordnet. In einer solchen Ausführungsvariante bildet die innere Schicht vorzugsweise die nach innen hin abschließende Schicht der Rohrleitung. Grundsätzlich liegt es aber auch im Rahmen der Erfindung, dass nach innen hin angrenzend an die innere Schicht eine innerste Schicht der Rohrleitung vorgesehen ist. Ganz besonders bevorzugt ist bei dieser Ausführungsvariante die zumindest eine Barriereschicht zwischen der inneren Schicht und der äußeren Schicht angeordnet. Im Rahmen dieser besonders empfohlenen Ausführungsform ist es bevorzugt, dass die Barriereschicht nach außen hin an die innere Schicht angrenzt und ganz besonders bevorzugt zwischen der inneren Schicht und der Haftvermittlerschicht angeordnet ist.

Gemäß einer empfohlenen Ausführungsform der Erfindung beträgt die Schichtdicke der Barriereschicht 10 % bis 60 %, vorzugsweise 15 % bis 50 % der Gesamtschichtdicke d der Rohrwandung. Zweckmäßigerweise beträgt die Schichtdicke der äußeren Schicht 10 % bis 40 %, bevorzugt 10 % bis 20 % der Gesamtschichtdicke d der Rohrwandung. Es empfiehlt sich, dass die Schichtdicke der Haftvermittlerschicht 2 % bis 15 %, bevorzugt 7 % bis 15 % der Gesamtschichtdicke d der Rohrwandung beträgt. Es liegt im Rahmen der Erfindung, dass die Schichtdicke der Haftvermittlerschicht zwischen 0,025 und 0,45 mm, bevorzugt zwischen 0,035 und 0,35 mm, besonders bevorzugt zwischen 0,04 und 0,3 mm und ganz besonders bevorzugt zwischen 0,05 und 0,2 mm beträgt.

Empfohlenermaßen beträgt die Schichtdicke der inneren Schicht 5 % bis 20 %, bevorzugt 7 % bis 15 % der Gesamtschichtdicke d der Rohrwandung. Es ist bevorzugt, dass die Schichtdicke der Außenschicht und/oder der äußeren Schicht und/oder der inneren Schicht und/oder der Barriereschicht zwischen 0,05 und 1,5 mm, bevorzugt zwischen 0,07 und 1,2 mm, besonders bevorzugt zwischen 0,1 und 0,8 mm, ganz besonders bevorzugt zwischen 0,1 und 0,5 mm beträgt.

Eine sehr empfohlene Ausführungsform der Erfindung zeichnet sich dadurch aus, dass die Außenschicht eine größere Schichtdicke aufweist, als die Haftvermittlerschicht. Es liegt im Rahmen der Erfindung, dass die äußere Schicht und/oder die innere Schicht und/oder die Barriereschicht eine größere Schichtdicke aufweisen, als die Haftvermittlerschicht.

Es ist bevorzugt, dass die Barriereschicht eine größere Schichtdicke aufweist, als die innere Schicht.

Gemäß einer empfohlenen Ausführungsform der Kraftfahrzeug-Rohrleitung steht die innere Schicht oder die Barriereschicht in direktem Kontakt zu einem in dem Fluidkanal geführten Fluid. Zweckmäßigerweise bilden also die innere Schicht oder die Barriereschicht die nach innen hin abschließende Schicht der Rohrleitung. Es liegt im Rahmen der Erfindung, dass die nach innen hin abschließende Schicht der Rohrleitung zumindest einen Leitfähigkeitszusatz aufweist, sodass diese nach innen hin abschließende Schicht der Rohrleitung vorzugsweise elektrisch leitfähig ausgebildet ist.

Es liegt weiterhin im Rahmen der Erfindung, dass die erfindungsgemäße Kraftfahrzeug-Rohrleitung durch Extrusion bzw. Koextrusion der Schichten hergestellt wird.

Gemäß besonders bevorzugter Ausführungsform weist die Rohrleitung zumindest fünf Schichten, vorzugsweise genau fünf Schichten auf und zwar mit der Schichtabfolge von außen nach innen: Außenschicht aus Polyamid, insbesondere Polyamid 6.12 / äußere Schicht aus Polyamid, insbesondere Polyamid 6 / Haftvermittlerschicht, insbesondere aus Polypropylen / innere Schicht aus zumindest einem thermoplastischen Elastomer, insbesondere auf Basis von EPDM / Barriereschicht, insbesondere aus Polypropylen. Gemäß einer alternativen Ausführungsform ist die Barriereschicht zwischen der Haftvermittlerschicht und der inneren Schicht angeordnet, so dass sich ein fünfschichtiges Konstrukt mit folgendem Schichtaufbau von außen nach innen ergibt: Außenschicht aus Polyamid, insbesondere Polyamid 6.12 / äußere Schicht aus Polyamid, insbesondere Polyamid 6 / Haftvermittlerschicht, insbesondere aus Polypropylen / Barriereschicht, insbesondere aus Polypropylen / innere Schicht aus zumindest einem thermoplastischen Elastomer, insbesondere auf Basis von EPDM. Grundsätzlich liegt es auch im Rahmen der Erfindung, dass die Kraftfahrzeug-Rohrleitung eine innerste Schicht und eine äußerste Schicht aufweist, so dass die Kraftfahrzeug-Rohrleitung dann zumindest sechs Schichten bzw. sieben Schichten aufweist.

Es liegt im Rahmen der Erfindung, dass die Kraftfahrzeug-Rohrleitung zumindest bereichsweise, bevorzugt vollständig, als Wellrohr ausgebildet ist. Wellrohr meint hier, dass die Rohrleitung bzw. die Rohrwandung, insbesondere die Außenoberfläche der Rohrleitung bzw. der Rohrwandung, Wellenberge und Wellentäler aufweist, die über den Umfang der Rohrleitung umlaufen. Empfohlenermaßen haben diese Wellenberge und Wellentäler der Rohrleitung über zumindest einen Teil der Länge der Rohrleitung, bevorzugt über die gesamte Länge bzw. im Wesentlichen über die gesamte Länge der Rohrleitung gleiche bzw. im Wesentlichen gleiche Abstände voneinander. Eine alternative Ausführungsvariante ist dadurch gekennzeichnet, dass die Rohrleitung bzw. die Außenoberfläche der Rohrleitung zumindest bereichsweise, vorzugsweise vollständig glatt bzw. im Wesentlichen glatt ausgebildet ist.

Der Erfindung liegt die Erkenntnis zugrunde, dass die erfindungsgemäße mehrschichtige Kraftfahrzeug-Rohrleitung sowohl hinsichtlich ihrer Barriereeigenschaften, als auch im Hinblick auf ihre mechanische Stabilität bzw. Resistenz hervorragende Eigenschaften aufweist. Die Rohrleitung erfüllt somit bezüglich der Barriereeigenschaften gegenüber dem in dem Fluidkanal geführten Fluid, insbesondere dem fluiden Temperiermedium bzw. fluiden Kühlmedium und auch hinsichtlich der mechanischen Stabilität alle Anforderungen. Die Rohrleitung bzw. Temperier-Rohrleitung ist über einen breiten Temperaturbereich temperaturbeständig und es tritt auch bei starker mechanischer Beanspruchung keine Delamination der Schichten auf. Weiterhin zeigt die erfindungsgemäße Rohrleitung eine zufriedenstellende thermische Isolierung. Die erfindungsgemäße Rohrleitung ist aufgrund ihres speziellen Schichtaufbaus darüber hinaus gleichsam universell bzw. flexibel in Temperier-Kreisläufen bzw. Kühlkreisläufen von Kraftfahrzeugen einsetzbar. So kann die erfindungsgemäße Rohrleitung als Temperier-Rohrleitung bzw. Kühlrohrleitung in Klimaanlagen eingesetzt werden und eignet sich gleichzeitig auch dafür, in Temperier-Kreisläufen von Elektro- und/oder Hybrid-Kraftfahrzeugen, insbesondere zur Temperierung bzw. Kühlung der Batteriesysteme eingesetzt zu werden. Diese flexible Einsetzbarkeit der erfindungsgemäßen Kraftfahrzeug-Rohrleitung stellt einen signifikanten Vorteil der Erfindung dar. Die erfindungsgemäße Rohrleitung kann darüber hinaus mit geringem Fertigungsaufwand und somit geringen Fertigungskosten hergestellt werden. Die bevorzugte Fertigung der Rohrleitung durch Koextrusion des Schichtenverbundes ist problemlos, effektiv und energiesparend möglich.

Nachfolgend wird die Erfindung anhand einer lediglich ein Ausführungsbeispiel darstellenden Zeichnung näher erläutert. Es zeigen in schematischer Darstellung:

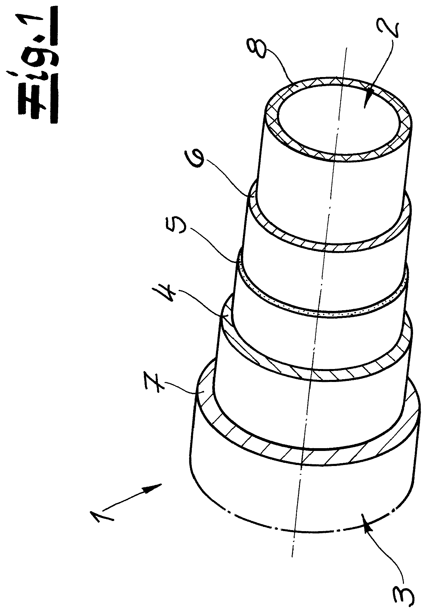

- Fig. 1: eine perspektivische Ansicht einer erfindungsgemäßen Kraftfahrzeug-Rohrleitung und

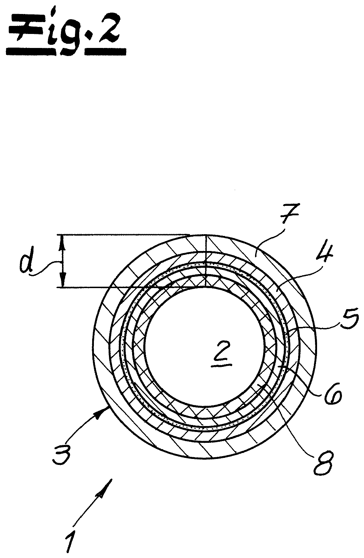

- Fig. 2: einen Schnitt durch den Gegenstand nach Fig. 1.

Die Figuren zeigen eine erfindungsgemäße mehrschichtige Kraftfahrzeug-Rohrleitung 1. Im Ausführungsbeispiel gemäß den Figuren mag es sich bei dieser Rohrleitung 1 um eine Temperier-Rohrleitung, insbesondere um eine Kühlrohrleitung für Temperier-Kreisläufe bzw. Kühlkreisläufe in einem Kraftfahrzeug handeln. Die Rohrleitung 1 weist erfindungsgemäß einen Fluidkanal 2 und eine den Fluidkanal 2 umgebende Rohrwandung 3 auf. Durch die Rohrleitung 1 wird in dem Fluidkanal 2 ein fluides Medium, insbesondere ein fluides Temperiermedium bzw. Kühlmedium, geführt, das in den Figuren nicht näher dargestellt ist. Empfohlenermaßen und im Ausführungsbeispiel gemäß den Figuren ist die Rohrwandung 3 mehrschichtig ausgebildet und weist fünf Schichten auf. Bei diesen fünf Schichten handelt es sich von außen nach innen um eine Außenschicht 7, eine äußere Schicht 4, eine Haftvermittlerschicht 5, eine innere Schicht 6 und eine Barriereschicht 8. In dieser Ausführungsform gemäß den Figuren bildet die Barriereschicht 8 eine Innenschicht der Rohrleitung 1, die empfohlenermaßen und im Ausführungsbeispiel nach innen hin an die innere Schicht 6 anschließt. Gemäß einer alternativen Ausführungsform der Erfindung, die in den Figuren nicht dargestellt ist, folgt auf die Haftvermittlerschicht 5 zunächst die Barriereschicht 8 und dann die innere Schicht 6.

Die nach innen hin abschließende Schicht der Rohrleitung 1 - vorzugsweise und im Ausführungsbeispiel die Barriereschicht 8 - kann nach einer Ausführungsform Leitfähigkeitsadditive aufweisen, um sie elektrisch leitfähig auszubilden. Wenn gemäß alternativer Ausführungsvariante, die in den Figuren nicht dargestellt ist, die innere Schicht 6 die nach innen hin abschließende Schicht der Rohrleitung 1 bildet, kann die innere Schicht 6 derartige Leitfähigkeitsadditive aufweisen.

Zweckmäßigerweise und im Ausführungsbeispiel besteht die Außenschicht 7 im Wesentlichen aus einem aliphatischen Polyamid, vorzugsweise aus Polyamid 6.12. Die Außenschicht 7 kann zusätzlich Additive enthalten. Empfohlenermaßen und im Ausführungsbeispiel besteht die Außenschicht 7 zu mindestens 95 Gew.-% aus Polyamid 6.12. Darüber hinaus ist eine äußere Schicht 4 vorgesehen, die vorzugsweise und im Ausführungsbeispiel gemäß den Figuren nach innen hin an die Außenschicht 7 anschließt. Die äußere Schicht 4 besteht gemäß bevorzugter Ausführungsform und im Ausführungsbeispiel im Wesentlichen aus Polyamid 6 und kann zusätzlich Additive aufweisen, wobei die äußere Schicht 4 zweckmäßigerweise und im Ausführungsbeispiel zu mindestens 95 Gew.-% aus Polyamid 6 besteht.

Erfindungsgemäß ist eine Haftvermittlerschicht 5 vorgesehen, die vorzugsweise auf Basis von Polypropylen ausgebildet ist. Die Haftvermittlerschicht 5 schließt empfohlenermaßen und im Ausführungsbeispiel nach innen hin an die innere Schicht 4 an. Zweckmäßigerweise und im Ausführungsbeispiel besteht die Haftvermittlerschicht 5 im Wesentlichen aus Polypropylen und kann zusätzlich Additive enthalten. Im Ausführungsbeispiel mag die Haftvermittlerschicht 5 zu mindestens 95 Gew.-% aus Polypropylen bestehen.

Erfindungsgemäß ist eine innere Schicht 6 aus zumindest einem thermoplastischen Elastomer vorgesehen. Zweckmäßigerweise schließt die innere Schicht 6 nach innen hin an die Haftvermittlerschicht 5 an. Empfohlenermaßen und im Ausführungsbeispiel ist das thermoplastische Elastomer der inneren Schicht 6 auf Basis von Ethylen-Propylen-Dien-Kautschuk (EPDM) ausgebildet. Vorzugsweise und im Ausführungsbeispiel handelt es sich bei dem thermoplastischen Elastomer der inneren Schicht 6 um ein thermoplastisches Vulkanisat auf Basis von EPDM und ganz besonders bevorzugt besteht die innere Schicht 6 im Wesentlichen aus dem thermoplastischen Vulkanisat und kann zusätzlich Additive enthalten. In diesem Zusammenhang ist es besonders bevorzugt, dass die innere Schicht 6 zu mindestens 95 Gew.-% aus dem thermoplastischen Elastomer bzw. dem thermoplastischen Vulkanisat auf Basis von EPDM besteht.

Zweckmäßigerweise und im Ausführungsbeispiel schließt nach innen hin an die innere Schicht 6 eine Barriereschicht 8 an. Die Barriereschicht 8 bildet dann gleichsam eine Innenschicht der Rohrleitung 1. Die Barriereschicht 8 bzw. die Innenschicht steht vorzugsweise und im Ausführungsbeispiel in direktem Kontakt zu dem in dem Fluidkanal 2 geführten fluiden Temperiermedium. Empfohlenermaßen besteht die Barriereschicht 8 im Wesentlichen aus Polypropylen. Die Barriereschicht 8 kann zusätzliche Additive enthalten. Vorzugsweise und im Ausführungsbeispiel besteht die Barriereschicht 8 zu mindestens 95 Gew.-% aus Polypropylen.

Die Gesamtschichtdicke d der Rohrwandung 3 der Rohrleitung 1 beträgt zweckmäßigerweise 0,5 bis 2,5 mm, bevorzugt 0,6 bis 2,2 mm und besonders bevorzugt 0,75 bis 2,0 mm. Empfohlenermaßen und im Ausführungsbeispiel weist die Außenschicht 7 eine größere Schichtdicke auf, als die Haftvermittlerschicht 5. Die Haftvermittlerschicht 5 ist bevorzugt und in dem in den Figuren dargestellten Schichtenverbund die Schicht mit der geringsten Schichtdicke. Somit sind zweckmäßigerweise und im Ausführungsbeispiel die Außenschicht 7 und die äußere Schicht 4 und die innere Schicht 6 und die Barriereschicht 8 jeweils dicker als die Haftvermittlerschicht 5. Im Rahmen der Erfindung und im Ausführungsbeispiel weist darüber hinaus die Barriereschicht 8 eine größere Schichtdicke auf, als die innere Schicht 6.

## Patentansprüche

**1.** Mehrschichtige Kraftfahrzeug-Rohrleitung (1) zur Durchleitung zumindest eines fluiden Mediums, wobei die Rohrleitung (1) einen Fluidkanal (2) und eine den Fluidkanal (2) umgebende Rohrwandung (3) aufweist, wobei die Rohrwandung (3) mehrschichtig ausgebildet ist und zumindest drei Schichten aufweist und zwar mit folgendem Schichtaufbau von außen nach innen:
- eine äußere Schicht (4) aus zumindest einem Polyamid, insbesondere aus zumindest einem aliphatischen Polyamid
- eine Haftvermittlerschicht (5)
- eine innere Schicht (6) aus zumindest einem thermoplastischen Elastomer,
wobei die Gesamtschichtdicke d der Rohrwandung (3) 0,3 bis 3,0 mm, vorzugsweise 0,5 bis 2,5 mm und bevorzugt 0,75 bis 2,0 mm beträgt,
wobei die Rohrleitung (1) zumindest eine Barriereschicht (8) aufweist, wobei die Barriereschicht (8) aus Polypropylen besteht bzw. im Wesentlichen aus Polypropylen besteht und wobei die zumindest eine Barriereschicht (8) eine Innenschicht der Rohrleitung (1) bildet, die nach innen hin an die innere Schicht (6) anschließt.

**2.** Rohrleitung nach Anspruch 1, wobei die äußere Schicht (4) aus zumindest einem aus der Gruppe "Polyamid 6, Polyamid 10, Polyamid 11, Polyamid 12" ausgewählten Polyamid, vorzugsweise aus Polyamid 6, besteht bzw. im Wesentlichen besteht.

**3.** Rohrleitung nach einem der Ansprüche 1 oder 2, wobei das thermoplastische Elastomer auf Basis zumindest einer aus der Gruppe: "Ethylen-Propylen-Dien-Kautschuk (EPDM), Butylkautschuk, Chlorbutylkautschuk, Styrol-Butadien-Kautschuk, Nitrilkautschuk, Nitril-Butadien-Kautschuk" ausgewählten Komponente, bevorzugt auf Basis von Ethylen-Propylen-DienKautschuk (EPDM) ausgebildet ist.

**4.** Rohrleitung nach einem der Ansprüche 1 bis 3, wobei die Haftvermittlerschicht (5) auf Basis zumindest eines Polyolefins, vorzugsweise auf Basis von Polypropylen ausgebildet ist.

**5.** Rohrleitung nach einem der Ansprüche 1 bis 4, wobei die Rohrleitung (1) eine Außenschicht (7) aufweist, die nach außen hin an die äußere Schicht (4) anschließt und die vorzugsweise auf Basis zumindest eines Polyamids, bevorzugt auf Basis zumindest eines aliphatischen Polyamids, besonders bevorzugt auf Basis zumindest eines aus der Gruppe: "Polyamid 6.12, Polyamid 6.6, Polyamid 6.10, Polyamid 6.16" und ganz besonders bevorzugt auf Basis von Polyamid 6.12 ausgebildet ist.

**6.** Rohrleitung nach Anspruch 5, wobei die Schichtdicke der Außenschicht (7) 5 % bis 20 %, bevorzugt 10 % bis 15 % der Gesamtschichtdicke d der Rohrwandung (3) beträgt.

**7.** Rohrleitung nach einem der Ansprüche 1 bis 6, wobei die Schichtdicke der Barriereschicht (8) 10 % bis 60 %, vorzugsweise 15 % bis 50 % der Gesamtschichtdicke d der Rohrwandung (3) beträgt.

**8.** Rohrleitung nach einem der Ansprüche 1 bis 7, wobei die Schichtdicke der äußeren Schicht (4) 10 % bis 40 %, bevorzugt 10 % bis 20 % der Gesamtschichtdicke d der Rohrwandung (3) beträgt.

**9.** Rohrleitung nach einem der Ansprüche 1 bis 8, wobei die Schichtdicke der Haftvermittlerschicht (5) 2 % bis 15 %, bevorzugt 7 % bis 15 % der Gesamtschichtdicke d der Rohrwandung (3) beträgt.

**10.** Rohrleitung nach einem der Ansprüche 1 bis 9, wobei die Schichtdicke der inneren Schicht (6) 5 % bis 20 %, bevorzugt 7 % bis 15 % der Gesamtschichtdicke d der Rohrwandung (3) beträgt.

**11.** Rohrleitung nach einem der Ansprüche 5 bis 10, wobei die Außenschicht (7) eine größere Schichtdicke aufweist, als die Haftvermittlerschicht (5).

**12.** Rohrleitung nach einem der Ansprüche 1 bis 11, wobei die Barriereschicht (8) eine größere Schichtdicke aufweist, als die innere Schicht (6).

## Geänderte Patentansprüche

### Geänderte Patentansprüche gemäss Regel 137(2) EPÜ.

1. Mehrschichtige Kraftfahrzeug-Rohrleitung (1) zur Durchleitung zumindest eines fluiden Mediums, wobei die Rohrleitung (1) einen Fluidkanal (2) und eine den Fluidkanal (2) umgebende Rohrwandung (3) aufweist, wobei die Rohrwandung (3) mehrschichtig ausgebildet ist und zumindest drei Schichten aufweist und zwar mit folgendem Schichtaufbau von außen nach innen:
- eine äußere Schicht (4) aus zumindest einem Polyamid, insbesondere aus zumindest einem aliphatischen Polyamid
- eine Haftvermittlerschicht (5)
- eine innere Schicht (6) aus zumindest einem thermoplastischen Elastomer,
wobei die Gesamtschichtdicke d der Rohrwandung (3) 0,3 bis 3,0 mm, vorzugsweise 0,5 bis 2,5 mm und bevorzugt 0,75 bis 2,0 mm beträgt,
wobei die Rohrleitung (1) zumindest eine Barriereschicht (8) aufweist, wobei die Barriereschicht (8) auf Basis zumindest eines Polyolefins, bevorzugt auf Basis von Polypropylen ausgebildet ist und wobei die Barriereschicht (8) eine Innenschicht der Rohrleitung (1) bildet, die nach innen hin an die innere Schicht (6) anschließt.

2. Rohrleitung nach Anspruch 1, wobei die äußere Schicht (4) aus zumindest einem aus der Gruppe "Polyamid 6, Polyamid 10, Polyamid 11, Polyamid 12" ausgewählten Polyamid, vorzugsweise aus Polyamid 6, besteht bzw. im Wesentlichen besteht.

3. Rohrleitung nach einem der Ansprüche 1 oder 2, wobei das thermoplastische Elastomer auf Basis zumindest einer aus der Gruppe: "Ethylen-Propylen-Dien-Kautschuk (EPDM), Butylkautschuk, Chlorbutylkautschuk, Styrol-Butadien-Kautschuk, Nitrilkautschuk, Nitril-Butadien-Kautschuk" ausgewählten Komponente, bevorzugt auf Basis von Ethylen-Propylen-DienKautschuk (EPDM) ausgebildet ist.

4. Rohrleitung nach einem der Ansprüche 1 bis 3, wobei die Haftvermittlerschicht (5) auf Basis zumindest eines Polyolefins, vorzugsweise auf Basis von Polypropylen ausgebildet ist.

5. Rohrleitung nach einem der Ansprüche 1 bis 4, wobei die Rohrleitung (1) eine Außenschicht (7) aufweist, die nach außen hin an die äußere Schicht (4) anschließt und die vorzugsweise auf Basis zumindest eines Polyamids, bevorzugt auf Basis zumindest eines aliphatischen Polyamids, besonders bevorzugt auf Basis zumindest eines aus der Gruppe: "Polyamid 6.12, Polyamid 6.6, Polyamid 6.10, Polyamid 6.16" und ganz besonders bevorzugt auf Basis von Polyamid 6.12 ausgebildet ist.

6. Rohrleitung nach Anspruch 5, wobei die Schichtdicke der Außenschicht (7) 5 % bis 20 %, bevorzugt 10 % bis 15 % der Gesamtschichtdicke d der Rohrwandung (3) beträgt.

7. Rohrleitung nach einem der Ansprüche 1 bis 6, wobei die Schichtdicke der Barriereschicht (8) 10 % bis 60 %, vorzugsweise 15 % bis 50 % der Gesamtschichtdicke d der Rohrwandung (3) beträgt.

8. Rohrleitung nach einem der Ansprüche 1 bis 7, wobei die Schichtdicke der äußeren Schicht (4) 10 % bis 40 %, bevorzugt 10 % bis 20 % der Gesamtschichtdicke d der Rohrwandung (3) beträgt.

9. Rohrleitung nach einem der Ansprüche 1 bis 8, wobei die Schichtdicke der Haftvermittlerschicht (5) 2 % bis 15 %, bevorzugt 7 % bis 15 % der Gesamtschichtdicke d der Rohrwandung (3) beträgt.

10. Rohrleitung nach einem der Ansprüche 1 bis 9, wobei die Schichtdicke der inneren Schicht (6) 5 % bis 20 %, bevorzugt 7 % bis 15 % der Gesamtschichtdicke d der Rohrwandung (3) beträgt.

11. Rohrleitung nach einem der Ansprüche 5 bis 10, wobei die Außenschicht (7) eine größere Schichtdicke aufweist, als die Haftvermittlerschicht (5).

12. Rohrleitung nach einem der Ansprüche 1 bis 11, wobei die Barriereschicht (8) eine größere Schichtdicke aufweist, als die innere Schicht (6).
